# FASCICULE DE BREVET EUROPEEN

(11) **EP 4 331 331 B1**
(45) Date de publication et mention de la délivrance du brevet: **09.10.2024**
(21) Numéro de dépôt: 23194012.3
(22) Date de dépôt: 29.08.2023
(51) Int. Cl.: A01B 19/02, A01B 63/00, A01B 63/24, A01B 39/18

(54) **HERSE ÉTRILLE**
HACKSTRIEGEL
COMB HARROW

(30) Priorité: 01.09.2022 FR 2208783
(43) Date de publication de la demande: 06.03.2024
(73) Titulaire: Kverneland Group Les Landes-Genusson, 85130 Les Landes-Genusson (FR)
(72) Inventeur: GENY, Jean-Marc, 54380 SAIZERAIS (FR)
(74) Mandataire: Oudin, Stéphane

(56) Documents cités:
- EP-A1- 3 167 698
- EP-A1- 3 903 549
- EP-A1- 3 977 851
- WO-A1-2018/191767
- RU-U1- 195 217

## Description

### Domaine technique de l'invention

La présente invention concerne le domaine général de l'agriculture, et plus particulièrement une herse étrille attelée à un tracteur pour des travaux de désherbage mécanique d'un champ.

### Etat de la technique

Dans le domaine de l'agriculture, le désherbage mécanique, notamment par hersage, est une technique anciennement très répandue, que le développement et les progrès de la chimie ont reléguée à un cercle restreint de cultures spécialisées ou à certains systèmes de culture tels que, notamment, la culture biologique.

Toutefois, avec la réduction généralisée des usages de désherbants chimiques, notamment en application de mesures de protection de l'environnement, l'alternative mécanique revêt aujourd'hui un intérêt immédiat et croissant, y compris dans le cadre des systèmes de culture conventionnels.

Ainsi, de nos jours, il est connu de recourir, à des herses étrilles attelées à un tracteur et munies d'une pluralité de dents de griffage qui, en griffant et vibrant, déracinent les jeunes adventices présentes sur le champ. Ce type de herses permet un désherbage rapide et précis entre plusieurs rangs de culture.

L'efficacité de ce type de herses étrilles repose sur les réglages suivants :
- la pression au sol déterminée par un ensemble de ressorts de traction exerçant un effort des dents de griffage sur le sol,
- l'agressivité déterminée par le réglage de l'inclinaison de l'ensemble des dents de griffage durant le travail de la terre (plus les dents de griffage sont verticales, plus l'agressivité est forte),
- la profondeur de travail réglée par le biais de roues de terrage.

Par ailleurs, il est connu d'avoir des herses étrilles comprenant un châssis attelé à un tracteur et étant repliable pour permettre de déplacer facilement lesdites herses étrilles sur les voies publiques, le repliage dudit châssis étant assuré par des actionneurs avantageusement hydrauliques.

Il est également connu d'avoir des dents de griffage solidaires de paniers fixés sur ledit châssis et d'escamoter lesdites dents de griffage par rapport au panier associé afin d'éviter, par exemple, de repasser sur des zones déjà désherbées.

Ce type de herses étrilles, décrit notamment au moins en partie dans les demandes de brevet européen EP 3 903 549 ou EP 3 977 851, est certes efficace pour le désherbage mécanique, mais il ne permet pas de s'adapter facilement à toutes les configurations du champ à désherber, de conserver ou de modifier les réglages définis par l'utilisateur lorsque les dents de griffage d'un ou plusieurs paniers sont escamotées.

### Résumé de l'invention

Le but de la présente invention est donc de proposer une alternative aux herses étrilles connues, cette alternative étant solide et pérenne et pouvant s'adapter à toutes les configurations du champ à désherber. Par ailleurs, cette alternative permet un réglage aisé et pérenne de la pression exercée sur le sol, de l'agressivité et de la position des dents de griffage.

Conformément à l'invention, il est donc proposé une herse étrille muni d'au moins un châssis agencé pour être attelé à un véhicule agricole et supportant une pluralité de paniers comprenant chacun deux longerons s'étendant parallèlement au plan sagittal P dudit châssis et sous ce dernier, et une pluralité de barres parallèles entre elles, disposées sous lesdits longerons, montées pivotantes sur ces derniers autour d'un axe A perpendiculaire audit plan sagittal P et reliées entre elles par une tringle, chaque barre recevant une pluralité de dents de griffage étant chacune montée pivotante sur ladite barre autour d'un axe perpendiculaire audit plan sagittal P entre une position de travail et une position d'escamotage et réciproquement, chaque dent de griffage étant associée à un point de tirage à un ressort de traction tendant à la ramener dans sa position de travail,
ladite herse étrille étant remarquable en ce qu'elle comporte au moins :
- un actionneur de réglage de pression permettant de modifier la tension des ressorts de traction des dents de griffage d'au moins un panier,
- un actionneur de réglage d'agressivité disposé entre le châssis et l'extrémité supérieure d'un bras monté pivotant à son extrémité inférieure sur ledit châssis autour d'un axe B perpendiculaire audit plan sagittal P et recevant entre ses extrémités inférieure et supérieure une tige s'étendant perpendiculairement audit plan sagittal P et reliée à la barre avant d'au moins un panier par un ensemble de biellettes/levier en forme générale de Z déformable comportant au moins un levier s'étendant perpendiculairement et de part et d'autre de la tige, une première biellette montée pivotante à son extrémité supérieure sur l'extrémité inférieure dudit levier, et une deuxième biellette montée pivotante à son extrémité supérieure sur l'extrémité inférieure de ladite première biellette autour d'un axe C perpendiculaire audit plan sagittal P et à son extrémité inférieure sur ladite barre avant de sorte que le déplacement de ladite tige entraine le pivotement de ladite barre avant, et - un actionneur d'escamotage disposé entre l'extrémité supérieure du levier et la première biellette pour faire passer les dents de griffage d'un panier de leur position de travail à leur position d'escamotage, et réciproquement, et en ce que le point de tirage de chaque dent de griffage est positionné sur l'axe A de pivotement de la barre associée, et en ce que ledit axe C de pivotement de la deuxième biellette et ledit axe B de pivotement du bras sont coaxiaux, lorsque les dents de griffage du panier associé sont en position d'escamotage.

La tige s'étend avantageusement de part et d'autre du bras et est reliée à chacune de ses extrémités à la barre avant d'un de deux paniers adjacents par un ensemble de biellettes/levier.

Selon un mode de réalisation avantageux, chaque ressort de traction est tendu entre un point de tirage d'une des dents de griffage d'un panier et une grille se déplaçant parallèlement à elle-même vers l'avant ou l'arrière du châssis sous l'action de l'actionneur de réglage de pression de sorte que le déplacement de cette dernière modifie la tension dudit ressort de traction.

Ladite grille est avantageusement solidaire de chacun des deux longerons du panier associé par l'intermédiaire d'une biellette avant et une biellette arrière montées pivotantes sur la grille et les longerons autour d'axes perpendiculaires audit plan sagittal P, lesdits axes étant tels que leurs projections sur ledit plan P déterminent les sommets d'un parallélogramme déformable, ledit actionneur de réglage de pression étant disposé entre l'extrémité inférieure de la biellette avant et le longeron associé.

Les actionneurs de réglage de pression, de réglage d'agressivité et d'escamotage sont de préférence des vérins hydrauliques double effet connectés à un circuit hydraulique du véhicule agricole.

La herse étrille comporte avantageusement au moins :
- un boitier calculateur fixé sur son châssis et agencé pour communiquer avec un système de géolocalisation du véhicule agricole par l'intermédiaire d'une connexion filaire normalisée ISOBUS,
- un boitier de jonction fixé sur ledit châssis et raccordé au boitier calculateur, ledit boitier de jonction contenant une carte électronique associée à une pluralité de sorties électriques basses tension alimentant chacune une valve hydraulique normalement fermée pilotant chaque actionneur d'escamotage des dents de griffage d'un panier,
- un bloc hydraulique étant agencé pour autoriser, inverser ou bloquer la circulation d'huile provenant de l'entrée et du retour d'un groupe hydraulique du véhicule agricole, et
- deux tuyauteries raccordées audit bloc hydraulique, déployées sur la largeur totale du châssis, et permettant d'une part, d'alimenter lesdites valves hydrauliques propres à chaque actionneur d'escamotage et, d'autre part, le retour de l'huile de chaque actionneur d'escamotage vers le groupe hydraulique du véhicule agricole.

Selon un mode de réalisation avantageux, le châssis comporte une poutre principale s'étendant perpendiculairement et de part et d'autre dudit plan sagittal P et une pluralité de structures globalement horizontales, fixées chacune sur la poutre principale, et supportant au moins un panier.

De manière préférée, la poutre principale est composée de trois tronçons, à savoir un tronçon médian et deux tronçons d'extrémités montés pivotants chacun sur l'une des extrémités longitudinales dudit tronçon médian autour d'un axe horizontal parallèle audit plan sagittal P de sorte à pourvoir replier ledit châssis à l'aide d'actionneurs de relevage.

### Brève description des figures

D'autres avantages et caractéristiques ressortiront mieux de la description qui va suivre d'un mode d'exécution de l'invention, en référence à la figure annexée sur laquelle :
[Fig 1] est une vue en perspective arrière d'une herse étrille conforme à l'invention,
[Fig 2] est une vue en perspective avant partielle de la herse étrille de la figure 1,
[Fig 3] est une vue en perspective avant d'un panier de la herse étrille de la figure 1,
[Fig 4] est une vue de côté du panier de la figure 3, la pression exercée sur le sol par ses dents de griffage étant minimale,
[Fig 5] est une vue de côté du panier de la figure 3, la pression exercée sur le sol par ses dents de griffage étant maximale,
[Fig 6] est une vue de côté du panier de la figure 3, l'agressivité de ses dents de griffage étant minimale,
[Fig 7] est une vue de côté du panier de la figure 3, l'agressivité de ses dents de griffage étant maximale,
[Fig 8] est une vue de côté du panier de la figure 3, ses dents de griffage étant en position travail,
[Fig 9] est une vue de côté du panier de la figure 3, ses dents de griffage étant en position d'escamotage,
[Fig 10] est une vue en perspective partielle agrandie d'une dent de griffage du panier de la figure 3,
[Fig 11] est une vue de détail agrandie du panier de la figure 8,
[Fig 12] est une vue de détail agrandie du panier de la figure 9, le vérin d'escamotage étant en position rentrée,
[Fig 13] est une vue de détail agrandie du panier de la figure 9, l'agressivité de ses dents de griffage étant modifiée,
[Fig 14] est une vue en perspective avant partielle agrandie de la herse étrille de la figure 1.

### Description des modes de réalisation

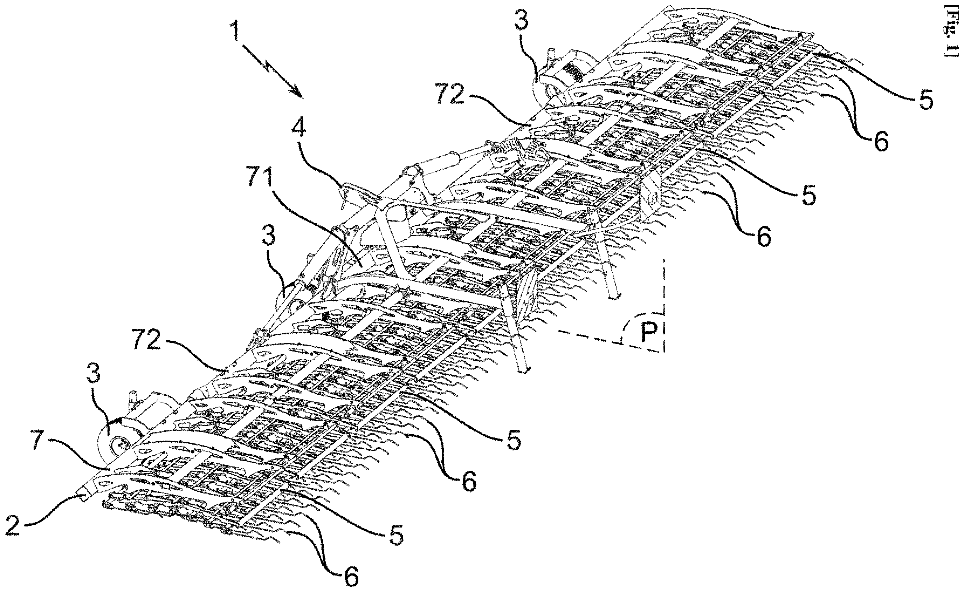

En référence à la figure 1, la herse étrille 1 selon l'invention est prévue pour être attelée par sa face avant à un véhicule agricole, classiquement un tracteur, non représenté sur les figures, ce dernier possédant plusieurs sources d'alimentation hydraulique, une alimentation électrique, de préférence en 12 Volts, et un système de géolocalisation par GPS avec une connexion normalisée ISOBUS.

On désigne ici par "avant" tout élément ou partie d'élément de la herse étrille 1 selon l'invention disposé du côté du véhicule agricole et par "arrière" tout élément ou partie d'élément disposé du côté opposé au véhicule agricole.

Pour rappel, la norme ISOBUS (ISO 11783) permet de rendre compatible la communication entre un véhicule agricole et son outil attelé, même s'ils ne sont pas du même constructeur. Elle permet également l'échange de données entre le véhicule agricole et un logiciel de gestion de parcelles.

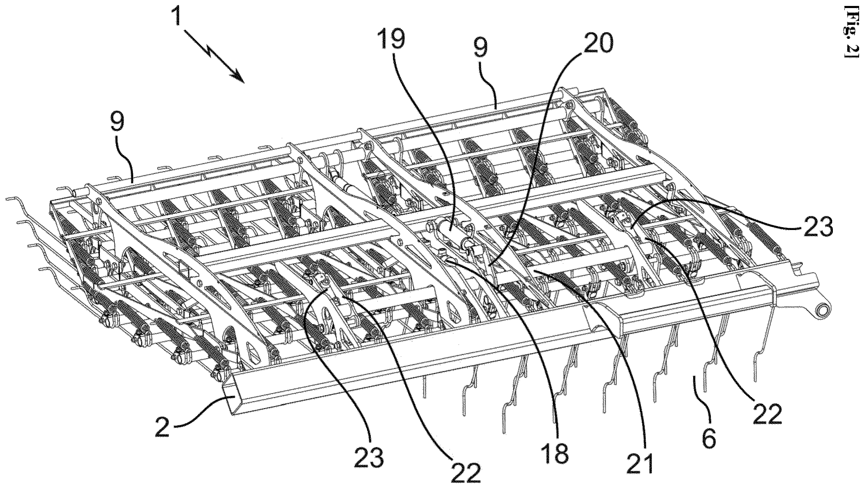

En référence aux figures 1 et 2, la herse étrille 1 selon l'invention comporte au moins :
- un châssis 2 reposant sur une pluralité de roues de terrage 3 permettant de configurer la hauteur du châssis 2 par rapport au sol, et étant attelé au véhicule agricole par un attelage 4, avantageusement du type attelage à trois points normalisé, de préférence du type catégorie II,
- une pluralité de paniers 5 supportés, avantageusement de manière amovible, sur ledit châssis 2, leur nombre étant variable et dépendant de la largeur dudit châssis 2, chaque panier 5 recevant une pluralité de dents 6 de griffage, ces dernières étant conformées pour qu'en mode de fonctionnement normal de la herse étrille 1 leur extrémité inférieure soit en contact avec le sol et en arrière par rapport à leur extrémité supérieure, lesdites dents 6 de griffage étant inclinée par rapport à la verticale.

Le châssis 2 comporte une poutre principale 7 s'étendant perpendiculairement et de part et d'autre du plan sagittal P dudit châssis 2 et étant composée avantageusement d'au moins trois tronçons, à savoir un tronçon médian 71 et deux tronçons d'extrémité 72 montés pivotants chacun sur l'une des extrémités longitudinales dudit tronçon médian 71 autour d'un axe horizontal parallèle audit plan sagittal P de sorte à pourvoir replier ledit châssis 2, et donc la herse étrille 1 selon l'invention, pour effectuer des déplacements sur la voie publique. Le repliage du châssis 2 est effectué à l'aide d'actionneurs de relevage 8, avantageusement des vérins hydrauliques double effet connectés au circuit hydraulique du véhicule agricole.

On comprend bien qu'en fonction de la largeur de la herse étrille 1, la poutre principale 7 pourra être composée de plus trois tronçons et comprendre, par exemple, un tronçon supplémentaire monté pivotant sur l'extrémité libre de chacun des tronçons d'extrémité 72 autour d'un axe horizontal parallèle audit plan sagittal P.

Ledit châssis 2 comporte également une pluralité de structures 9 globalement horizontales, fixées chacune sur l'un des tronçons médian 71 et d'extrémités 72 de la poutre principale 7, et supportant au moins un panier 5.

Par ailleurs, sur le mode de réalisation représenté sur les figures, le châssis 2 comporte cinq structures 9 supportant chacune deux paniers 5. Toutefois, il va de soi que le nombre de structures 9 et paniers 5 peut varier en fonction des besoins de l'utilisateur.

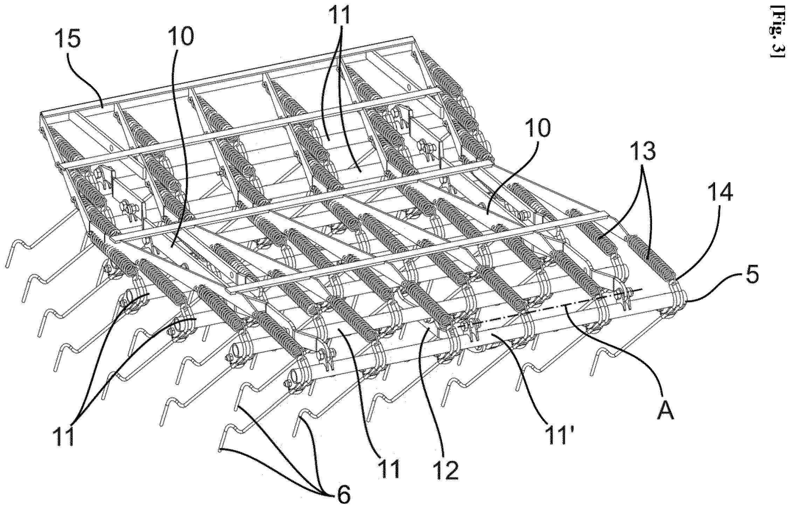

Selon le mode de réalisation représenté aux figures 3 à 5, chaque panier 5 comprend :
- deux longerons 10 s'étendant parallèlement au plan sagittal P dudit châssis 2 sous ce dernier et étant fixés avantageusement à une de ses structures 9,
- une pluralité de barres 11 parallèles entre elles, disposées sous lesdits longerons 10 et montées pivotantes sur ces derniers autour d'un axe A horizontal perpendiculaire au plan sagittal P dudit châssis 2, chaque barre 11 recevant une pluralité de dents 6 de griffage, lesdites dents 6 de griffage de chaque panier 5 étant disposées en quinconce.

Par ailleurs, les barres 11 d'un panier 5 sont reliées entre elles par une tringle 12 de sorte que le pivotement de la barre 11 située à l'avant du châssis 2, désignée ci-après par barre avant 11', entraine un pivotement identique de toutes les autres barres 11 dudit panier 5.

Chacune des dents 6 de griffage est montée pivotante sur la barre 11 associée autour d'un axe parallèle à l'axe longitudinal de cette dernière entre une position de travail, c'est-à-dire une position dans laquelle chaque dent 6 de griffage est inclinée de haut en bas et de l'avant vers l'arrière du châssis 2, et une position d'escamotage, c'est-à-dire une position dans laquelle chaque dent 6 de griffage s'étend horizontalement et en direction de l'arrière du châssis 2, et réciproquement. Pour cela, ledit axe de pivotement est disposé en dessous de la barre 11 et chaque dent 6 de griffage s'étend au-delà de ladite barre 11, afin que sa portion supérieure située au-dessus dudit axe de pivotement supérieure vienne en appui contre la face avant de ladite barre 11 de sorte à ne pas autoriser un pivotement de son extrémité inférieure vers l'avant du châssis 2 au-delà de sa position de travail.

En outre, chaque dent 6 de griffage est en forme globale de L pivoté de 180° et comporte une première aile 61 dont l'une des extrémités est en contact avec le sol et une deuxième aile 62 issue perpendiculairement de l'autre extrémité de ladite première aile 61. Dans cette hypothèse, chacune des dents 6 de griffage est montée pivotante, à proximité de la jonction entre ses première et deuxième ailes 61, 62, et la deuxième ailes 62 de chaque dent 6 de griffage s'étend alors au-dessus de la barre 11 et en direction de l'arrière du châssis 2.

La herse étrille 1 selon l'invention permet en outre de régler la pression exercée sur le sol par les dents 6 de griffage. Ainsi, chaque dent 6 de griffage est associée à un ressort de traction 13 tendant à la ramener dans sa position de travail, c'est-à-dire à ramener la portion supérieure de la dent 6 de griffage en appui contre la barre 11 associée. Pour cela, chaque ressort de traction 13 est tendu entre un point de tirage 14 situé à l'extrémité supérieure de ladite dent 6 de griffage, le cas échéant à l'extrémité libre de la deuxième aile 62, et une grille 15 mobile de sorte que le déplacement de cette dernière modifie la tension dudit ressort de traction 13 et, par conséquent, la pression exercée sur le sol par ladite dent 6 de griffage.

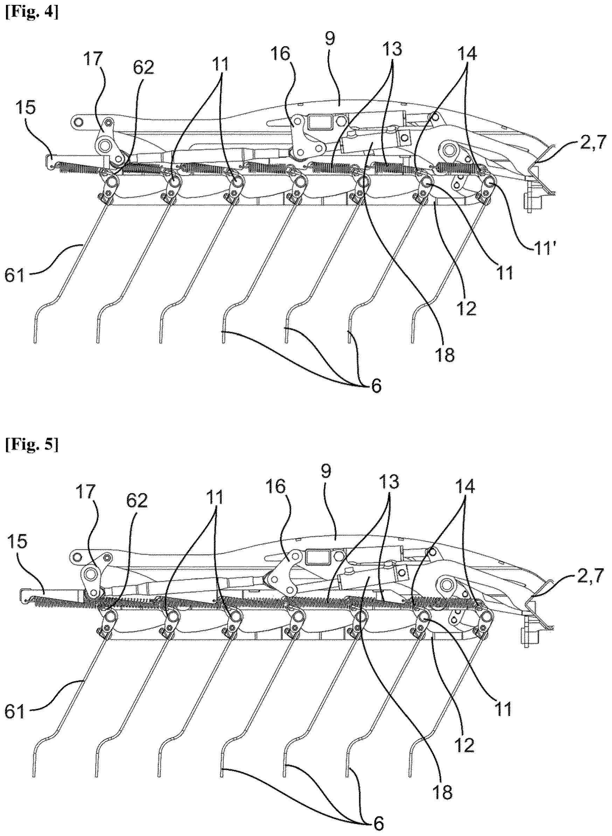

Pour cela, en référence aux figures 4 et 5, ladite grille 15 est solidaire de chacun des deux longerons 10 du panier 5 associé par l'intermédiaire d'une biellette avant 16, dite de poussée, et une biellette arrière 17, lesdites biellettes avant et arrière 16, 17 étant montées pivotantes sur la grille 15 et les longerons 10 autour d'axes perpendiculaires au plan sagittal P dudit châssis 2, lesdits axes étant tels que leurs projections sur ledit plan P déterminent les sommets d'un parallélogramme déformable afin que la grille 15 se déplace parallèlement à elle-même vers l'avant ou l'arrière du châssis 2. Pour la déplacer ladite grille 15, la herse étrille 1 comporte un actionneur 18, nommé ci-après actionneur de réglage de pression 18, avantageusement un vérin hydraulique double effet connecté au circuit hydraulique du véhicule agricole, permettant de modifier la tension du ressort de traction 13, ledit actionneur de réglage de pression 18 étant associé à la grille 15 et disposé entre l'extrémité inférieure de la biellette avant 16 et le longeron 10 associé. Ainsi, on comprend bien que lorsque que la tige de l'actionneur de réglage de pression 18 est rentrée (Cf. figure 4), la grille 15 est déplacée vers l'avant du châssis 2, la tension du ressort de traction 13 et la pression exercée sur le sol par les dents 6 de griffage sont alors minimales. Au contraire, lorsque que la tige de l'actionneur de réglage de pression 18 est sortie (Cf. figure 5), la grille 15 est déplacée vers l'arrière du châssis 2, la tension du ressort de traction 13 et la pression exercée sur le sol par les dents 6 de griffage sont alors maximales.

On comprend bien qu'avec cette configuration on peut régler avec un seul actionneur de réglage de pression 18 toutes les dents 6 de griffage d'au moins un panier 5 avec la même pression exercée sur le sol. Selon le mode de réalisation représenté à la figure 3, l'actionneur de réglage de pression 18 permet avantageusement de régler la pression exercée sur le sol par les dents 6 de griffage des deux paniers 5 adjacents supportés par la même structure 9 du châssis 2, ledit actionneur de réglage de pression 18 étant disposé entre les grilles 11 desdits deux paniers 5.

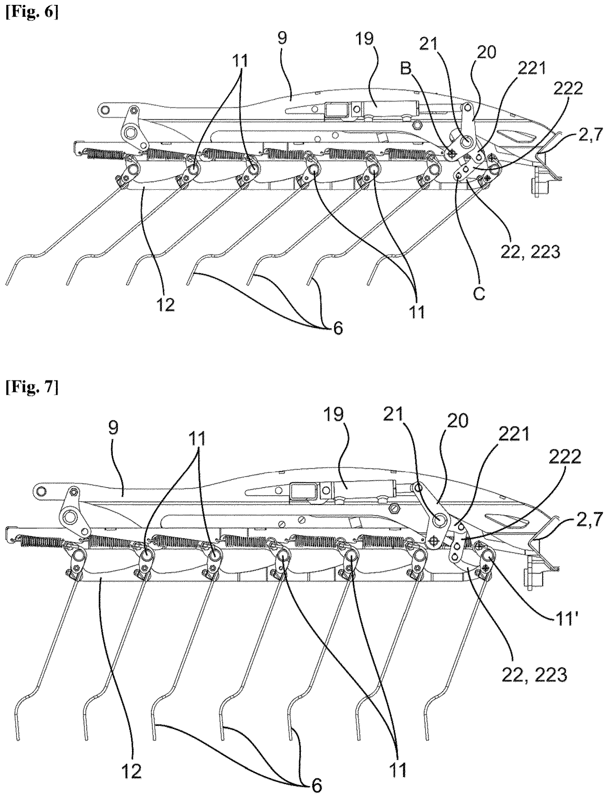

En référence aux figures 6 et 7, la herse étrille 1 selon l'invention permet également de régler l'agressivité des dents 6 de griffage, c'est-à-dire l'inclinaison par rapport à la verticale de la position de travail de ces dernières. On comprend bien que plus les dents sont inclinées et proches de la verticale, plus leur agressivité dans le sol est élevée.

Pour cela, la herse étrille 1 comprend un actionneur 19, nommé ci-après actionneur de réglage d'agressivité 19, avantageusement un vérin hydraulique double effet connecté au circuit hydraulique du véhicule agricole, disposé sensiblement horizontalement entre une structure 9 du châssis 2 et l'extrémité supérieure d'un bras 20 monté pivotant à son extrémité inférieure sur ladite structure 9 du châssis 2 autour d'un axe B perpendiculaire au plan sagittal P dudit châssis 2. Ledit bras 20 reçoit entre ses extrémités inférieure et supérieure une tige 21 s'étendant perpendiculairement audit plan sagittal P et de part et d'autre dudit bras 20. La tige 21 est reliée à la barre avant 11 d'au moins un panier 5 associé par un ensemble 22 de biellettes/levier de manière à ce que le déplacement de ladite tige 21 entraine le pivotement de ladite barre 11.

Chaque ensemble 22 de biellettes/levier est en forme générale de Z déformable et comporte au moins
- un levier 221 s'étendant perpendiculairement et de part et d'autre de ladite tige 21,
- une première biellette 222 montée pivotante à son extrémité supérieure sur l'extrémité inférieure dudit levier 221 autour d'un axe perpendiculaire au plan sagittal P dudit châssis 2, et
- une deuxième biellette 223 montée pivotante à son extrémité supérieure sur l'extrémité inférieure de ladite première biellette 222 autour d'un axe C perpendiculaire au plan sagittal P dudit châssis 2 et à son extrémité inférieure sur la barre avant 1 1' autour d'un axe perpendiculaire au plan sagittal P dudit châssis 2.

Selon le mode de réalisation représenté sur les figures, la tige 21 comprend avantageusement un ensemble 22 de biellettes/levier à chacune de ses extrémités, chacun de ses ensembles 22 étant alors relié à la barre avant 11' associé d'un de deux paniers 5 adjacents supportés par la même structure 9 du châssis 2.

Ainsi, en référence à la figure 6, lorsque la tige de l'actionneur de réglage d'agressivité 19 sort, l'extrémité supérieur du bras 20 pivote vers l'avant du châssis 2 en entrainant avec lui vers l'avant ladite tige 21, et la barre avant 11' associée pivote dans le sens horaire grâce à l'ensemble 22 de biellettes/levier associé, ce qui a pour effet de réduire l'inclinaison des dents 6 de griffage et de réduire l'agressivité de ces dernières. Au contraire, en référence à la figure 7, lorsque la tige de l'actionneur de réglage d'agressivité 19 rentre, l'extrémité supérieur du bras 20 pivote vers l'arrière du châssis 2 en entrainant avec lui vers l'arrière ladite tige 21, et la barre avant 11' pivote dans le sens antihoraire grâce à l'ensemble 22 de biellettes/levier associé, ce qui a pour effet d'augmenter l'inclinaison des dents 6 de griffage et d'augmenter l'agressivité de ces dernières.

On comprend bien qu'avec la tringle 12 précédemment décrite reliant entre elles toutes les barres 11 d'un panier 5, le pivotement de la barre avant 11' entraine le pivotement de toutes les autres barres 11 et le même réglage d'agressivité pour toutes les dents 6 de griffage du panier 5 considéré.

On comprend bien qu'avec cette configuration on peut régler avec un seul actionneur de réglage d'agressivité 19 toutes les dents 6 de griffage d'au moins un panier 5 avec la même agressivité sur le sol. Selon le mode de réalisation représenté à la figure 3, l'actionneur de réglage d'agressivité 19 permet avantageusement, grâce notamment à la configuration de la tige 21, de régler la pression exercée sur le sol par les dents 6 de griffage des deux paniers 5 adjacents supportés par la même structure 9 du châssis 2.

Les actionneurs de réglage d'agressivité 19 de la herse étrille 1 selon l'invention étant avantageusement montés sur les sorties d'un diviseur de débits volumétriques, ces derniers reçoivent le même volume d'huile et par conséquent, ont des longueurs toujours identiques entre eux. Le réglage de l'agressivité est alors uniforme sur l'ensemble des dents 6 de griffage de ladite herse étrille 1.

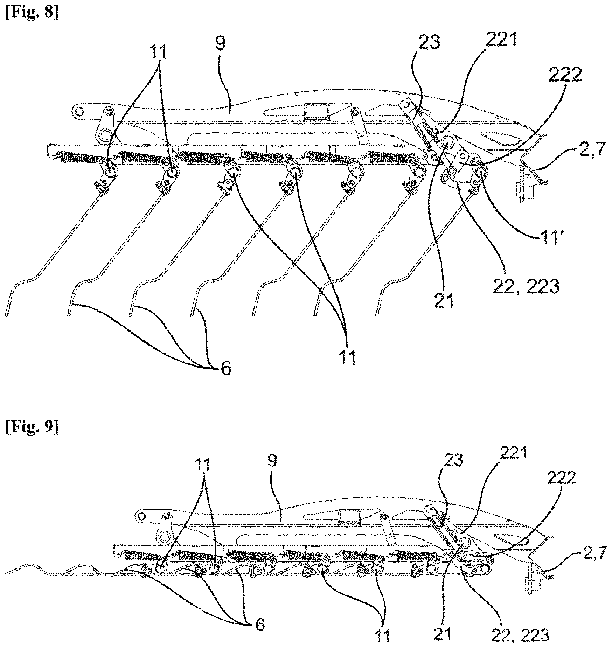

En référence aux figures 8 et 9, la herse étrille 1 selon l'invention permet également d'escamoter toutes les dents 6 de griffage d'un même panier 5, c'est-à-dire de relever ces dernières par rapport à la verticale de sorte qu'elles s'étendent à l'horizontale, leurs extrémités inférieures en direction vers l'arrière du châssis 2 (Cf. figure 9). La position d'escamotage évite notamment de passer les dents 6 de griffage sur des parcelles de culture déjà désherbées.

Pour cela, la herse étrille 1 comprend un actionneur 23, nommé ci-après actionneur d'escamotage 23, avantageusement un vérin hydraulique double effet connecté au circuit hydraulique du véhicule agricole, coopérant avec un l'ensemble 22 de biellettes/levier précédemment décrit pour faire passer les dents 6 de griffage d'un panier 5 de leur position de travail dans laquelle lesdites dents 6 de griffage sont à une inclinaison déterminée (Cf. figure 8), à leur position d'escamotage dans laquelle lesdites dents 6 de griffage s'étendent horizontalement (Cf. figure 9), et réciproquement. Pour cela, ledit actionneur d'escamotage 23 est avantageusement disposé entre l'extrémité supérieure du levier 221 de l'ensemble 22 de biellettes/levier associé au panier 5 et la première biellette 222 dudit ensemble 22, c'est-à-dire entre les extrémités supérieure et inférieure de cette dernière.

Il va de soi que l'actionneur d'escamotage 23 et l'ensemble 22 de biellettes/levier sont dimensionnés pour faire passer les dents 6 de griffage d'un panier 5 de leur position de travail à leur position d'escamotage, et réciproquement.

Ainsi, en référence à la figure 8, lorsque la tige de l'actionneur d'escamotage 23 sort, la première biellette 222 pivote dans le sens antihoraire en entrainant avec elle dans le même sens la barre avant 11' grâce à la deuxième biellette 223 de l'ensemble 22 de biellettes/levier associé, ce qui a pour effet d'incliner les dents 6 de griffage dans leur position de travail. Au contraire, en référence à la figure 9, lorsque la tige de l'actionneur d'escamotage 23 rentre, la première biellette 222 pivote dans le sens horaire en entrainant avec elle dans le même sens la barre avant 11' grâce à la deuxième biellette 223 de l'ensemble 22 de biellettes/levier associé, ce qui a pour effet d'escamoter les dents 6 de griffage.

On comprend bien qu'avec la tringle 12 précédemment décrite reliant entre elles toutes les barres 11 d'un panier 5, le pivotement de la barre avant 11' entraine le pivotement de toutes les autres barres 11 et la même position pour toutes les dents 6 de griffage du panier 5 considéré.

Compte tenu de la configuration avantageuse de la tige 21 avec un ensemble 22 de biellettes/levier à chacune de ses extrémités, on comprend bien que l'on peut, avec un seul actionneur d'escamotage 23, escamoter toutes les dents 6 de griffage d'un seul panier 5. Cette configuration est intéressante car l'escamotage des dents 6 de griffage d'un seul panier permet d'augmenter la précision du désherbage.

Compte tenu de ce qui précède, on comprend bien que sur la herse étrille 1 selon l'invention, les réglages de la pression exercée sur le sol, de l'agressivité et de la position (travail ou escamotage) de toutes les dents 6 de griffage d'au moins un panier 5 sont aisés car totalement indépendants les uns des autres.

Par ailleurs, la herse étrille 1 selon l'invention est également particulièrement intéressante car un utilisateur peut modifier l'un de ces différents réglages sans impact sur les autres réglages, ce qui garantit la pérennité des réglages.

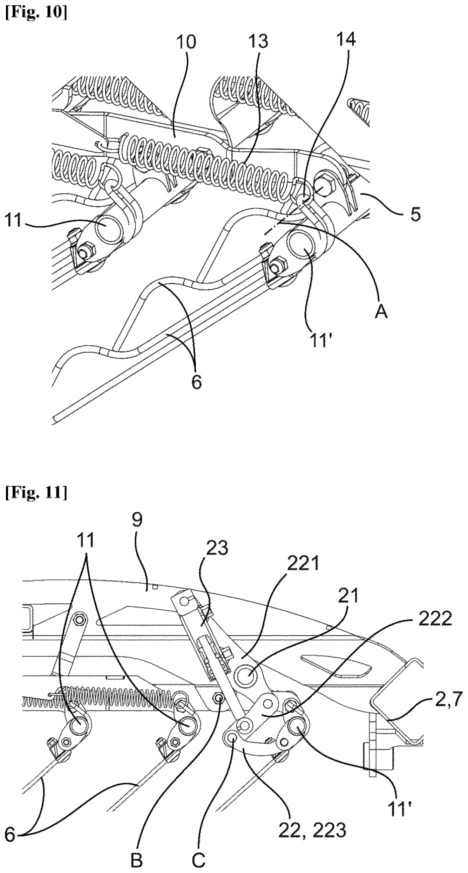

Ainsi, lorsque les dents 6 de griffage d'un ou plusieurs paniers 5 sont dans leur position d'escamotage, l'utilisateur peut toujours modifier le réglage de la pression au sol de l'ensemble des dents 6 de griffage des autres paniers 5 de la herse étrille 1 selon l'invention. Ceci est rendu possible par le fait qu'en référence à la figure 10, chaque dent 6 de griffage est telle que son point de tirage 14 du ressort de traction 13 est positionné sur l'axe de pivotement A de la barre 11 associée. On comprend bien qu'avec cette configuration spécifique, quel que soit le réglage de l'agressivité ou la position (travail ou escamotage) des dents 6 de griffage, les ressorts de traction ne subissent aucune modification de tension lors de pivotement des barres 11.

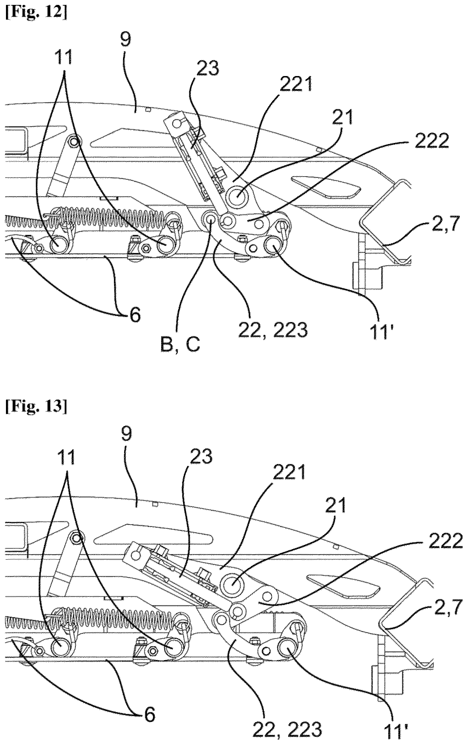

De même, en référence aux figures 11 à 13, lorsque les dents 6 de griffage d'un panier 5 sont en position d'escamotage, en rentrant la tige de l'actionneur d'escamotage 23, l'axe de pivotement C de la deuxième biellette 223 de l'ensemble 22 de biellettes/levier vient se positionner sur l'axe de rotation B du bras 20 associé à l'actionneur de réglage d'agressivité 19 (Cf. figure 12).

L'axe de pivotement C de la deuxième biellette 223 (par rapport à la première biellette 222) étant coaxial avec l'axe B de pivotement du bras 20, un pivotement du bras 20 n'engendre alors plus aucun mouvement des barres 11 porte dents du panier 5 dont les dents 6 de griffage ont été escamotées. L'utilisateur peut ainsi à tout moment modifier le réglage de l'agressivité des dents 6 de griffage des autres paniers 5 de la herse étrille 1 selon l'invention sans perturber le ou les paniers 5 dont les dents 6 de griffage ont été escamotées.

De plus, lorsque la tige de l'actionneur d'escamotage 23 sort complètement afin de déplacer les dents 6 de griffage d'un panier 5 de leur position d'escamotage à leur position de travail, ces dernières se positionnent alors automatiquement à une inclinaison préréglée correspondant au réglage de l'agressivité des dents 6 de griffage des autres paniers 5 de la herse étrille 1 selon l'invention.

On comprend bien que l'Homme du Métier n'aura aucune difficulté à ajouter des éléments supplémentaires notamment mécaniques tels que, par exemple, des renforts, des leviers, ou encore des biellettes pour garantir un fonctionnement optimal de la herse étrille 1 selon l'invention.

Enfin, afin de s'assurer de ne désherber qu'une seule fois chaque mètre carré des parcelles de culture, la herse étrille 1 selon l'invention associe la conception mécanique précédemment décrite autorisant l'escamotage de tout ou partie des dents 6 de griffage sans impact sur les réglages prédéfinis de la pression au sol et de l'agressivité, à l'utilisation de la cartographie GPS.

Pour cela, le châssis 2 de la herse étrille 1 selon l'invention est équipé, de manière classique, d'une pluralité d'organes, partiellement représentés sur les figures, permettant de réguler le débit fourni en continu par un groupe hydraulique du véhicule agricole et de filtrer l'huile.

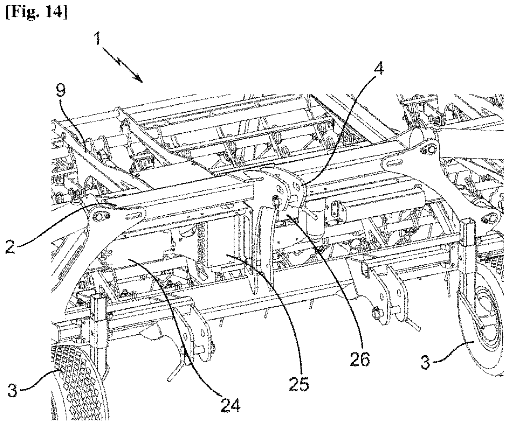

Ainsi ,en référence à la figure 14, la herse étrille 1 comporte au moins :
- un boitier calculateur 24 (en anglais ECU : Electronic Control Unit) fixé sur son châssis 2 et agencé pour communiquer avec un système de géolocalisation du véhicule agricole par l'intermédiaire d'une connexion filaire normalisée ISOBUS,
- un boitier de jonction 25 fixé sur ledit châssis 2 et raccordé au boitier calculateur 24, ledit boitier de jonction 25 contenant une carte électronique associée à une pluralité de sorties électriques (au moins dix) basses tension (à savoir une tension comprise entre zéro et douze Volts) alimentant chacune une valve hydraulique normalement fermée pilotant chaque actionneur d'escamotage 23 des dents 6 de griffage d'un panier 5,
- un bloc hydraulique 26, qui est avantageusement du type by-pass double effet, étant agencé pour autoriser, inverser ou bloquer la circulation d'huile provenant de l'entrée et du retour d'un groupe hydraulique du véhicule agricole
- deux tuyauteries raccordées audit bloc hydraulique 26, déployées sur la largeur totale du châssis 2, et permettant d'une part, d'alimenter lesdites valves hydrauliques propres à chaque actionneur d'escamotage 23 et, d'autre part, le retour de l'huile de chaque actionneur d'escamotage 23 vers le groupe hydraulique du véhicule agricole.

On désigne ici par "by-pass double effet" un distributeur 4/3 à centre tandem et à commande électrique permettant en position repos de bloquer les ports récepteurs raccordés au groupe hydraulique du véhicule agricole et de mettre en relation hydraulique les deux tuyauteries.

Le boitier calculateur 24 est avantageusement paramétré par en usine pour répondre à toutes les configurations possibles, chaque configuration étant notamment fonction du nombre de paniers 5 et d'actionneurs d'escamotage 23.

Par ailleurs, les informations du système de géolocalisation du véhicule agricole indiquant les zones du terrain à herser sont transmises du véhicule agricole au boitier calculateur 24 afin de relever ou non tout ou partie des dents 6 de griffage à des endroits déterminés à l'aide des actionneurs d'escamotage 23 associés.

On comprend bien que l'Homme du Métier n'aura aucune difficulté à ajouter des éléments notamment hydrauliques tels que, par exemple, des filtres, des limiteurs de débit, ou encore des soupapes pour garantir un fonctionnement optimal de la herse étrille 1 selon l'invention.

En outre, on comprend bien que cette configuration de la herse étrille 1 selon l'invention permet un désherbage efficace et précis de chaque mètre carré du champ à désherber. De plus, la mise en oeuvre de ladite herse étrille 1 est rapide et aisé notamment en raison, d'une part, d'un réglage indépendant de la pression exercée sur le sol, de l'agressivité et de la position des dents 6 de griffage de chaque paniers 5 et, d'autre part, de la possibilité d'un escamotage de tout ou partie des dents 6 de griffage d'un ou plusieurs paniers 5 sans impact sur les réglages prédéfinis de la pression au sol et de l'agressivité des dents 6 de griffage des autres paniers 5.

On comprend bien que la herse étrille 1 selon l'invention est, bien entendu, utilisée pour des travaux de désherbage mécanique d'un champ.

Enfin, il va de soi que les exemples de herse étrille 1 selon l'invention que l'on vient de donner ne sont que des illustrations particulières, en aucun cas limitatives des domaines de l'invention.

## Revendications

1. Herse étrille (1) muni d'au moins un châssis (2) agencé pour être attelé à un véhicule agricole et supportant une pluralité de paniers (5) comprenant chacun deux longerons (10) s'étendant parallèlement au plan sagittal P dudit châssis (2) et sous ce dernier, et une pluralité de barres (11, 11') parallèles entre elles, disposées sous lesdits longerons (10), montées pivotantes sur ces derniers autour d'un axe A perpendiculaire audit plan sagittal P et reliées entre elles par une tringle (12), chaque barre (11, 11') recevant une pluralité de dents (6) de griffage étant chacune montée pivotante sur ladite barre (11, 11') autour d'un axe perpendiculaire audit plan sagittal P entre une position de travail et une position d'escamotage et réciproquement, chaque dent (6) de griffage est associée à un point de tirage (14) à un ressort de traction (13) tendant à la ramener dans sa position de travail, ladite herse étrille (1) étant **caractérisée en ce qu'**elle comporte au moins :
- un actionneur de réglage de pression (18) permettant de modifier la tension des ressorts de traction (13) des dents (6) de griffage d'au moins un panier (5),
- un actionneur de réglage d'agressivité (19) disposé entre le châssis (2) et l'extrémité supérieure d'un bras (20) monté pivotant à son extrémité inférieure sur ledit châssis (2) autour d'un axe B perpendiculaire audit plan sagittal P et recevant entre ses extrémités inférieure et supérieure une tige (21) s'étendant perpendiculairement audit plan sagittal P et reliée à la barre avant (11') d'au moins un panier (5) par un ensemble (22) de biellettes/levier en forme générale de Z déformable comportant au moins un levier (221) s'étendant perpendiculairement et de part et d'autre de la tige (21), une première biellette (222) montée pivotante à son extrémité supérieure sur l'extrémité inférieure dudit levier (221), et une deuxième biellette (223) montée pivotante à son extrémité supérieure sur l'extrémité inférieure de ladite première biellette (222) autour d'un axe C perpendiculaire audit plan sagittal P et à son extrémité inférieure sur ladite barre avant (11') de sorte que le déplacement de ladite tige (21) entraine le pivotement de ladite barre avant (11'), et
- un actionneur d'escamotage (23) disposé entre l'extrémité supérieure du levier (221) et la première biellette (222) pour faire passer les dents (6) de griffage d'un panier (5) de leur position de travail à leur position d'escamotage, et réciproquement, et **en ce que** le point de tirage (14) de chaque dent (6) de griffage est positionné sur l'axe de pivotement A de la barre (11, 11') associée, et **en ce que** ledit axe C de pivotement de la deuxième biellette 223 et ledit axe B de pivotement du bras 20 sont coaxiaux, lorsque les dents (6) de griffage du panier (5) associé sont en position d'escamotage.

2. Herse étrille (1) selon la revendication 1 **caractérisée en ce que** la tige (21) s'étend de part et d'autre du bras (20) et est reliée à chacune de ses extrémités à la barre avant (11') d'un de deux paniers (5) adjacent par un ensemble (22) de biellettes/levier.

3. Herse étrille (1) selon l'une quelconque des revendications 1 ou 2 **caractérisée en ce que** chaque ressort de traction (13) est tendu entre un point de tirage (14) d'une des dents (6) de griffage d'un panier (5) et une grille (15) se déplaçant parallèlement à elle-même vers l'avant ou l'arrière du châssis (2) sous l'action de l'actionneur de réglage de pression (18) de sorte que le déplacement de cette dernière modifie la tension dudit ressort de traction (13).

4. Herse étrille (1) selon la revendication 3 **caractérisée en ce que** ladite grille (15) est solidaire de chacun des deux longerons (10) du panier (5) associé par l'intermédiaire d'une biellette avant (16) et une biellette arrière (17) montées pivotantes sur la grille (15) et les longerons (10) autour d'axes perpendiculaires audit plan sagittal P, lesdits axes étant tels que leurs projections sur ledit plan P déterminent les sommets d'un parallélogramme déformable, ledit actionneur de réglage de pression (18) étant disposé entre l'extrémité inférieure de la biellette avant (16) et le longeron (10) associé.

5. Herse étrille (1) selon l'une quelconque des revendications 1 à 4 **caractérisée en ce que** les actionneurs de réglage de pression (18), de réglage d'agressivité (19) et d'escamotage (23) sont des vérins hydrauliques double effet connectés à un circuit hydraulique du véhicule agricole.

6. Herse étrille (1) selon l'une quelconque des revendications 1 à 5 **caractérisée en ce qu'**elle comporte au moins :
- un boitier calculateur (24) fixé sur son châssis (2) et agencé pour communiquer avec un système de géolocalisation du véhicule agricole par l'intermédiaire d'une connexion filaire normalisée ISOBUS,
- un boitier de jonction (25) fixé sur ledit châssis (2) et raccordé au boitier calculateur (24), ledit boitier de jonction (25) contenant une carte électronique associée à une pluralité de sorties électriques basses tension alimentant chacune une valve hydraulique normalement fermée pilotant chaque actionneur d'escamotage (23) des dents (6) de griffage d'un panier (5),
- un bloc hydraulique (26) étant agencé pour autoriser, inverser ou bloquer la circulation d'huile provenant de l'entrée et du retour d'un groupe hydraulique du véhicule agricole, et
- deux tuyauteries raccordées audit bloc hydraulique (26), déployées sur la largeur totale du châssis (2), et permettant d'une part, d'alimenter lesdites valves hydrauliques propres à chaque actionneur d'escamotage (23) et, d'autre part, le retour de l'huile de chaque actionneur d'escamotage (23) vers le groupe hydraulique du véhicule agricole.

7. Herse étrille (1) selon l'une quelconque des revendications 1 à 6 **caractérisée en ce que** le châssis (2) comporte une poutre principale (7) s'étendant perpendiculairement et de part et d'autre dudit plan sagittal P et une pluralité de structures (9) globalement horizontales, fixées chacune sur la poutre principale (7), et supportant au moins un panier (5).

8. Herse étrille (1) selon la revendication 7 **caractérisée en ce que** la poutre principale (7) est composée d'au moins trois tronçons, à savoir un tronçon médian (71) et deux tronçons d'extrémités (72) montés pivotants chacun sur l'une des extrémités longitudinales dudit tronçon médian (71) autour d'un axe horizontal parallèle audit plan sagittal P de sorte à pourvoir replier ledit châssis (2) à l'aide d'actionneurs de relevage (8).

## Patentansprüche

1. Striegelegge (1), die mit mindestens einem Fahrgestell (2) ausgestattet ist, das dazu angeordnet ist, an ein landwirtschaftliches Fahrzeug angekoppelt zu werden, und eine Vielzahl von Rahmen (5) trägt, die jeweils zwei Längsträger (10) umfassen, die sich parallel zur Sagittalebene P des Fahrgestells (2) und unter diesen erstrecken, und eine Vielzahl von parallel zueinander angeordneten Stangen (11, 11'), die unter den Längsträgern (10) angeordnet sind, an diesen um eine Achse A senkrecht zur Sagittalebene P schwenkbar montiert sind und durch ein Gestänge (12) miteinander verbunden sind, wobei jede Stange (11, 11') eine Vielzahl von Greifzähnen (6) aufnimmt, die jeweils schwenkbar an der Stange (11, 11') um eine Achse senkrecht zur Sagittalebene P zwischen einer Arbeitsposition und einer Rückzugsposition und umgekehrt montiert sind, wobei jeder Greifzahn (6) einem Ziehpunkt (14) mit einer Zugfeder (13) zugeordnet ist, die darauf abzielt, ihn in seine Arbeitsposition zurückzubringen, wobei die Striegelegge (1) **dadurch gekennzeichnet ist, dass** sie mindestens Folgendes umfasst:
- ein Druckeinstellungsstellglied (18), das es ermöglicht, die Spannung der Zugfedern (13) der Greifzähne (6) mindestens eines Rahmens (5) zu verändern,
- ein Eingriffseinstellungsstellglied (19), das zwischen dem Fahrgestell (2) und dem oberen Ende eines Arms (20) angeordnet ist, der an seinem unteren Ende schwenkbar am Fahrgestell (2) um eine Achse B senkrecht zur Sagittalebene P montiert ist und zwischen seinem unteren und seinem oberen Ende einen Stab (21) aufnimmt, der sich senkrecht zur Sagittalebene P erstreckt und mit der vorderen Stange (11') mindestens eines Rahmens (5) durch einen Satz (22) von Verbindungsgliedern/Hebeln mit einer allgemeinen Z-Form verbunden ist, der mindestens einen Hebel (221), der sich senkrecht und auf beiden Seiten des Stabs (21) erstreckt, ein erstes Verbindungsglied (222), das an seinem oberen Ende am unteren Ende des Hebels (221) schwenkbar montiert ist, und ein zweites Verbindungsglied (223) umfasst, das an seinem oberen Ende am unteren Ende des ersten Verbindungsglieds (222) um eine Achse C senkrecht zur Sagittalebene P und an ihrem unteren Ende an der vorderen Stange (11') schwenkbar montiert ist, so dass die Bewegung des Stabs (21) das Schwenken der vorderen Stange (11') bewirkt, und
- ein Rückzugsstellglied (23), das zwischen dem oberen Ende des Hebels (221) und dem ersten Verbindungsglied (222) angeordnet ist, um die Greifzähne (6) eines Rahmens (5) aus ihrer Arbeitsposition in ihre Rückzugsposition und umgekehrt zu bringen, und
dadurch, dass der Ziehpunkt (14) jedes Greifzahns (6) auf der Schwenkachse A der zugeordneten Stange (11, 11') positioniert ist, und dass die Schwenkachse C des zweiten Verbindungsglieds 223 und die Schwenkachse B des Arms 20 koaxial sind, wenn sich die Greifzähne (6) des zugeordneten Rahmens (5) in der Rückzugsposition befinden.

2. Striegelegge (1) nach Anspruch 1, **dadurch gekennzeichnet, dass** sich der Stab (21) auf beiden Seiten des Arms (20) erstreckt und an jedem seiner Enden mit der vorderen Stange (11') eines von zwei benachbarten Rahmen (5) durch einen Satz (22) von Verbindungsgliedern/Hebeln verbunden ist.

3. Striegelegge (1) nach einem der Ansprüche 1 oder 2, **dadurch gekennzeichnet, dass** jede Zugfeder (13) zwischen einem Ziehpunkt (14) eines der Greifzähne (6) eines Rahmens (5) und einem Gitter (15) gespannt ist, das sich parallel zu sich selbst zur Vorder- oder Rückseite des Fahrgestells (2) unter der Wirkung des Druckeinstellungsstellglieds (18) bewegt, so dass die Bewegung des letzteren die Spannung der Zugfeder (13) verändert.

4. Striegelegge (1) nach Anspruch 3, **dadurch gekennzeichnet, dass** das Gitter (15) mit jedem der beiden Längsträger (10) des zugeordneten Rahmens (5) über ein vorderes Verbindungsglied (16) und ein hinteres Verbindungsglied (17), die schwenkbar am Gitter (15) und den Längsträgern (10) um Achsen senkrecht zur Sagittalebene P montiert sind, fest verbunden ist, wobei die Achsen derart sind, dass ihre Projektionen auf die Ebene P die Ecken eines verformbaren Parallelogramms bestimmen, wobei das Druckeinstellungsstellglied (18) zwischen dem unteren Ende des vorderen Verbindungsglieds (16) und dem zugeordneten Längsträger (10) angeordnet ist.

5. Striegelegge (1) nach einem der Ansprüche 1 bis 4, **dadurch gekennzeichnet, dass** das Druckeinstellungsstellglied (18), das Eingriffseinstellungsstellglied (19) und das Rückzugsstellglied (23) doppelt wirkende Hydraulikzylinder sind, die an einen Hydraulikkreis des landwirtschaftlichen Fahrzeugs angeschlossen sind.

6. Striegelegge (1) nach einem der Ansprüche 1 bis 5, **dadurch gekennzeichnet, dass** sie mindestens Folgendes umfasst:
- ein Rechenkasten (24), der an ihrem Fahrgestell (2) befestigt und dazu angeordnet ist, über eine standardisierte ISOBUS-Kabelverbindung mit einem Geolokalisierungssystem des landwirtschaftlichen Fahrzeugs zu kommunizieren,
- ein Anschlusskasten (25), der am Fahrgestell (2) befestigt und mit dem Rechenkasten (24) verbunden ist, wobei der Anschlusskasten (25) eine elektronische Karte enthält, die mit einer Vielzahl von elektrischen Niederspannungsausgängen verbunden ist, die jeweils ein normalerweise geschlossenes Hydraulikventil mit Strom versorgen, das jedes Rückzugsstellglied (23) der Greifzähne (6) eines Rahmens (5) bedient,
- ein Hydraulikblock (26), der dazu angeordnet ist, die Ölzirkulation vom Einlass und Rücklauf einer Hydraulikgruppe des landwirtschaftlichen Fahrzeugs zuzulassen, umzukehren oder zu blockieren, und
- zwei Leitungen, die mit dem Hydraulikblock (26) verbunden sind, über die gesamte Breite des Fahrgestells (2) installiert sind und ermöglichen, dass einerseits die für jeder Rückzugsstellglied (23) spezifischen Hydraulikventile gespeist werden und andererseits das Öl von jedem Rückzugsstellglied (23) zur Hydraulikgruppe des landwirtschaftlichen Fahrzeugs rückgeführt wird.

7. Striegelegge (1) nach einem der Ansprüche 1 bis 6, **dadurch gekennzeichnet, dass** das Fahrgestell (2) einen Hauptträger (7), der sich senkrecht und auf beiden Seiten der Sagittalebene P erstreckt, und eine Vielzahl von im Allgemeinen horizontalen Strukturen (9) umfasst, die jeweils am Hauptträger (7) befestigt sind und mindestens einen Rahmen (5) tragen.

8. Striegelegge (1) nach Anspruch 7, **dadurch gekennzeichnet, dass** der Hauptträger (7) aus mindestens drei Abschnitten besteht, nämlich einem Mittelabschnitt (71) und zwei Endabschnitten (72), die jeweils an einem der Längsenden des Mittelabschnitts (71) um eine horizontale Achse parallel zur Sagittalebene P schwenkbar montiert sind, um das Fahrgestell (2) mit Hilfe von Hebestellgliedern (8) zusammenklappen zu können.

## Claims

1. A comb harrow (1) provided with at least one frame (2) arranged so as to be coupled to an agricultural vehicle and supporting a plurality of baskets (5) each comprising two spars (10) extending parallel to the sagittal plane P of said frame (2) and under the latter, and a plurality of bars (11, 11') parallel to each other, arranged under said spars (10), pivotably mounted on these about an axis A perpendicular to said sagittal plane P and connected to each other by a rail (12), each bar (11, 11') receiving a plurality of scratching teeth (6) each being pivotably mounted on said bar (11, 11') about an axis perpendicular to said sagittal plane P between a working position and a stowage position and vice versa, each scratching tooth (6) is associated at a pulling point (14) with a tension spring (13) tending to bring it into its working position,
said comb harrow (1) being **characterized in that** it includes at least:
- a pressure setting actuator (18) allowing modifying the tension of the tension springs (13) of the scratching teeth (6) of at least one basket (5),
- an aggressiveness setting actuator (19) arranged between the frame (2) and the upper end of an arm (20) pivotably mounted at its lower end on said frame (2) about an axis B perpendicular to said sagittal plane P and receiving between its lower and upper ends a rod (21) extending perpendicularly to said sagittal plane P and connected to the front bar (11') of at least one basket (5) by an assembly (22) of connecting rods/lever generally shaped as a deformable Z including at least one lever (221) extending perpendicularly and on either side of the rod (21), a first connecting rod (222) pivotably mounted at its upper end on the lower end of said lever (221), and a second connecting rod (223) pivotably mounted at its upper end on the lower end of said first connecting rod (222) about an axis C perpendicular to said sagittal plane P and at its lower end on said front bar (11') so that the movement of said rod (21) causes pivoting of said front bar (11'), and
- a stowage actuator (23) arranged between the upper end of the lever (221) and the first connecting rod (222) to make the scratching teeth (6) of a basket (5) switch from their working position into their stowage position, and vice versa, and
**in that** the pulling point (14) of each scratching tooth (6) is positioned on the pivot axis A of the associated bar (11, 11'), and **in that** said pivot axis C of the second connecting rod (223) and said pivot axis B of the arm 20 are coaxial, when the scratching teeth (6) of the associated basket (5) are in the stowage position.

2. The comb harrow (1) according to claim 1, **characterized in that** the rod (21) extends on either side of the arm (20) and is connected at each of its ends to the front bar (11') of one of two adjacent baskets (5) by an assembly (22) of connecting rods/lever.

3. The comb harrow (1) according to any one of claims 1 or 2 **characterized in that** each tension spring (13) is tensioned between a pulling point (14) of one of the scratching teeth (6) of a basket (5) and a grid (15) moving parallel to itself towards the front or rear of the frame (2) under the action of the pressure setting actuator (18) so that the movement of the latter modifies the tension of said tension spring (13).

4. The comb harrow (1) according to claim 3 **characterized in that** said grid (15) is secured to each of the two spars (10) of the associated basket (5) via a front connecting rod (16) and a rear connecting rod (17) pivotably mounted on the grid (15) and the spars (10) about axes perpendicular to said sagittal plane P, said axes being such that their projections onto said plane P determine the apexes of a four-bar linkage, said pressure setting actuator (18) being arranged between the lower end of the front connecting rod (16) and the associated spar (10).

5. The comb harrow (1) according to any one of claims 1 to 4 **characterized in that** the pressure setting (18), aggressiveness setting (19) and stowage (23) actuators are double-acting hydraulic cylinders connected to a hydraulic circuit of the agricultural vehicle.

6. The comb harrow (1) according to any one of claims 1 to 5 **characterized in that** it includes at least:
- a computer box (24) fastened on its frame (2) and arranged so as to communicate with a geolocation system of the agricultural vehicle via an ISOBUS standard wired connection,
- a junction box (25) fastened on said frame (2) and connected to the computer box (24), said junction box (25) containing an electronic board associated with a plurality of low-voltage electrical outputs each supplying a normally closed hydraulic valve controlling each stowage actuator (23) of the scratching teeth (6) of a basket (5),
- a hydraulic block (26) being arranged so as to enable, invert or block oil circulation from the inlet and the return of a hydraulic unit of the agricultural vehicle, and
- two piping connected to said hydraulic block (26), deployed over the total width of the frame (2), and allowing, on the one hand, supplying said hydraulic valves specific to each stowage actuator (23) and, on the other hand, the return of oil from each stowage actuator (23) towards the hydraulic unit of the agricultural vehicle.

7. The comb harrow (1) according to any one of claims 1 to 6 **characterized in that** the frame (2) includes a main beam (7) extending perpendicularly and on either side of said sagittal plane P and a plurality of generally horizontal structures (9), each fastened on the main beam (7), and supporting at least one basket (5).

8. The comb harrow (1) according to claim 7 **characterized in that** the main beam (7) is composed of at least three sections, namely a middle section (71) and two end sections (72) each pivotably mounted on one of the longitudinal ends of said middle section (71) about a horizontal axis parallel to said sagittal plane P so as to be able to fold said frame (2) using lifting actuators (8).
